# EUROPÄISCHE PATENTSCHRIFT

(11) **EP 2 015 912 B1**
(45) Veröffentlichungstag und Bekanntmachung des Hinweises auf die Patenterteilung: **03.08.2011**
(21) Anmeldenummer: 07724992.8
(22) Anmeldetag: 08.05.2007
(51) Int. Cl.: B29C 44/08, B29C 44/58, B29C 37/00, B29C 45/00, B60R 21/215

(54) **VERFAHREN ZUR HERSTELLUNG EINES FORMTEILES MIT EINER ÖFFNUNGSNUT**
METHOD FOR PRODUCING A MOULDED PART WITH AN OPENING GROOVE
PROCEDE POUR PRODUIRE UNE PIECE MOULEE MUNIE D'UNE RAINURE D'OUVERTURE

(30) Priorität: 10.05.2006 DE 102006021999
(43) Veröffentlichungstag der Anmeldung: 21.01.2009
(73) Patentinhaber: Peguform GmbH, 79268 Bötzingen (DE)
(72) Erfinder: BIANCHI, Willi, 21339 Lüneburg (DE); COORDES, Ralf, 93326 Abensberg (DE)
(74) Vertreter: Neunert, Peter Andreas
(86) Internationale Anmeldenummer: PCT/EP2007/004069
(87) Internationale Veröffentlichungsnummer: WO 2007/128573

(56) Entgegenhaltungen:
- WO-A-03/021170
- DE-A1- 10 020 997
- DE-A1- 10 344 708
- JP-A- 2003 326 559
- US-A- 3 825 637

## Beschreibung

Die vorliegende Erfindung betrifft ein Verfahren zur Herstellung von überwiegend aus Kunststoff bestehenden Formteilen mit einer Öffnungsnut für eine Airbagentfaltungsöffnung für Airbagsysteme in Kfz-Innenräumen.

Derartige beispielsweise als Instrumententafeln oder als Türverkleidungen eines Kraftfahrzeuges ausgebildete Formteile sind aus zahlreichen Schriften bekannt. Türverkleidungen und Instrumententafeln verdecken nicht nur elektrische Leitungen oder sonstige für die Funktion des Kraftfahrzeuges relevante Vorrichtungen, sondern immer häufiger auch Sicherheitssysteme, wie z. B. Airbagmodule. Derartige Airbagmodule verdeckende Türverkleidungen oder Instrumententafeln weisen in der Regel ein Trägerteil aus thermoplastischem Kunststoff und eine Formhaut auf, wobei der Bereich zwischen Trägerteil und Formhaut häufig mit Polyurethanschaum ausgeschäumt ist. Damit sich bei einem Unfall der Airbag in den Fahrgastraum entfalten kann, müssen in diesem Formteil Anordnungen vorgesehen sein, die ein Öffnen dieses Bereiches ermöglichen. Üblicherweise sind bei derartigen Abdeckungen zu diesem Zweck auf ihrer Rückseite, der Sichtseite entgegengesetzten Seite, Öffnungsnuten, Perforierungen oder Schwächungslinien vorgesehen, die ein Aufbrechen dieses Bereiches beim Aufblähen des Airbags ermöglichen.

Es besteht die Forderung von Benutzern von Kraftfahrzeugen, dass derartige Schwächungslinien von der Sichtseite des Innenraumes her nicht zu erkennen sind. Dies bedingt, dass die nach außen hin sichtbare Formhaut lediglich auf ihrer Rückseite mit einer Schwächung versehen ist und die Schwächungslinie oder Öffnungsnut im Formteil so angeordnet ist, dass sie weit genug von der Formhaut beabstandet ist, sodass sie auch bei längerer und stärkerer Belastung des Formteiles nicht sichtbar wird. Gleichzeitig muss natürlich nach wie vor gewährleistet sein, dass bei einem Unfall problemlos eine Öffnung für den Airbag gebildet wird. Dies alles bedingt, dass eine präzise gearbeitete Schwächungslinie oder Öffnungsnut in dem Formteil vorhanden sein muss.

In der WO 97/03866 wird eine Kunststoffverkleidung beschrieben, bei der auf der Sichtseite entgegengesetzten Innenseite eine Schwachstelle durch eine Vielzahl von scharfkantigen, von der Innenseite aus in die Kunststoffverkleidung eingebrachten Ausnehmungen gebildet ist, die Teil einer Art Reißnaht sind, die beim Entfalten des Airbags aufreißt und diesen freigibt. Die WO 97/03866 sieht vor, dass diese Reißnaht in einem separaten Arbeitsgang von der Rückseite her in das Formteil eingebracht wird.

Die DE 196 51 758 A1 beschreibt ein Fahrzeuginnenverkleidungsbauteil, das eine brechbare Naht aufweist, wodurch eine Airbagöffnung gebildet wird, wenn der Airbag betätigt wird. Die Ausbildung dieser Naht wird bereits während des Spritzformens durch die Ausbildung einer Nut vorbereitet, die dann in einem weiteren Arbeitsgang, dem sogenannten sekundären Kerben, mittels eines Ultraschallschneidgerätes, eines Messers oder eines ähnlichen Gerätes nach dem Ausformen vertieft wird.

In der DE 10 2004 030 786 A1 wird ein Verfahren zur Einbringung einer Schwächungsnut eines Mehrschichtverbundes aus Träger, Hinterschäumung und Oberflächenhaut beschrieben, wobei mit einem skalpellartigen Schneidvorgang die Sollbruchlinie, von innen geschnitten wird.

In der DE 103 44 708 A1 wird ein Verfahren und eine Vorrichtung zur Herstellung einer Airbagabdeckung beschrieben, wobei das Trägerbauteil nach dem Spritzgießen im noch plastisch verformbaren Zustand durch Heißprägen mit Schwächungsnuten versehen wird.

In der DE 101 60 185 B4 wird die gezielte Schwächung des Trägers einer Innenverkleidung für ein Airbagmodul beschrieben, wobei die Bildung einer Kontur für die Airbagnut vor dem vollständigen Ausreagieren des Werkstoffes in den Innenverkleidungsteilträger eingebracht wird.

***Die*** US 3,825,637 A ***beschreibt ein Formwerkzeug, dessen Kavität mit Hilfe eines Schiebers partiell so verkleinert werden kann, dass Bereiche mit geringerer Wandstärke im späteren Formteil entstehen.***

***Die*** DE 100 20 997 A1 ***beschreibt ein Verfahren zur Ausbildung einer Sollreisslinie in einer Fahrzeug-Armaturentafel, wobei ein Heiß form- bzw. SchweiBwerkzeug eingesetzt wird.***

Neben diesen vorgenannten Verfahren sind zahlreiche weitere ähnliche Verfahren bekannt, wobei jedoch die Mehrzahl der Verfahren den Nachteil haben, dass zur Ausbildung der Öffnungsnut ein zusätzlicher Arbeitsschritt in einem dafür passenden Werkzeug erforderlich ist. Ein weiterer Nachteil besteht häufig darin, dass die fertig geformten Formteile teilweise nur schwer zugänglich für Schneidwerkzeuge sind, was den Arbeitsschritt weiter erschwert.

Es besteht somit weiterhin Bedarf an einem Verfahren, mit dessen Hilfe auf einfache Weise und ohne großen zusätzlichen Aufwand in einem Formteil, das als Abdeckung für einen Airbag dient, eine Öffnungsnut für eine Airbagentfaltungsöffnung auszubilden ist.

Gelöst wird diese Aufgabe durch ein Verfahren mit den Merkmalen des Anspruchs 1. Vorteilhafte Ausführungsformen des Verfahrens sind in den Unteransprüchen wiedergegeben.

Häufig werden Türverkleidungen, Formteile für Armaturen oder sonstige Teile zur Verkleidung des Innenraumes von Kraftfahrzeugen in mehreren Schritten gefertigt. So wird bspw. zunächst ein Trägerteil in einem Spritzwerkzeug formgespritzt. Als Ausgangsmaterial für diese Trägerteile werden in der Regel thermoplastische Kunststoffe, wie z. B. Polypropylen (PP), Styrolmaleinsäureanhydrid-Copolymer (SMA), Polycarbonat-Polybutylenterephthalat-Blends (PC/BPT), Acrylnitril-Butadien-Styrol-Polycarbonat-Blends (ABS/PC) etc. eingesetzt, wobei diese Kunststoffe häufig durch Glasfasern und/oder Mineralstoffe verstärkt werden. Nach dem Erstarren des thermoplastischen Kunststoffes wird das Formteil dem Formwerkzeug entnommen und zusammen mit einer Formhaut in ein Schäumwerkzeug eingebracht, wobei das Trägerteil bspw. mit einem Formstempel des Schäumwerkzeuges verbunden wird, während die Formhaut auf die Matrize aufgebracht wird. In diesem Schäumwerkzeug werden Trägerteil und Formhaut in einem bestimmten Abstand zueinander gehalten und der Zwischenraum zwischen Formhaut und Trägerteil wird mit einem Schaummaterial gefüllt. Als Schaummaterial wird dabei häufig Polyurethan eingesetzt. Der erstarrende Schaum verbindet Formhaut und Trägerteil zum Formteil. Nach dem Erstarren des Schaumes wurde bisher entsprechend dem Stands der Technik das geschäumte Formteil aus dem Schäumwerkzeug entnommen und die erforderlichen Öffnungsnuten oder Schwächungslinien anschließend mit Hilfe eines Ultraschallmessers, einer Fräse, einer Schneidevorrichtung oder eines Lasers in das Schaummaterial und den Träger sowie zum Teil auch in die Formhaut eingebracht.

Es wurde nun gefunden, dass dieser aufwändige zusätzliche Arbeitsschritt eingespart werden kann, wenn man schon während des Spritzgießens, bevor der thermoplastische Kunststoff erstarrt, in dem Trägerteil an der Stelle, an der später einmal die Schwächungsstelle eingebracht werden soll, eine Nut anbringt, sodass das Trägerteil an dieser Stelle verdünnt wird. Zum Anbringen dieser Nut können verschiedene Verfahren eingesetzt werden. Ein günstiges Verfahren besteht darin, mit einem Schieber in den noch nicht erstarrten thermoplastischen Kunststoff des Trägerteils einzudringen und den Kunststoff an dieser Stelle so weit zu verdrängen, dass nur noch eine dünne Schicht, eine sog. Schwimmhaut, stehen bleibt. Dieses Verfahren hat gegenüber einer direkten Formgebung den Vorteil, dass damit relativ genau sehr dünne Schichten gefertigt werden können. Mit einem direkten Formgebungsverfahren dagegen, bei dem die Form die Nut schon vorgibt, kann eine derart dünne Schicht nur schwer realisiert werden, da es Schwierigkeiten bereitet, das thermoplastische Material gleichmäßig in einen derart schmalen Spalt einzubringen. Ein zusätzliches Problem entsteht dadurch, dass der Bereich des Trägerteils, der beim Öffnen des Airbags als Teil des Deckels aufklappt, vollständig von dieser Öffnungsnut umfasst ist, sodass ein gleichmäßiges Spritzgießen dieses Teils des Formteiles durch den Engpass, der durch die vorgebildete Nut entstehen würde, zusätzlich erschwert wird.

In einem zweiten Schritt wird das Trägerteil mit der vorgefertigten Nut aus dem Spritzgießwerkzeug herausgenommen und in das sog. Schäumwerkzeug eingebracht. Das Schäumwerkzeug besteht bspw. aus einem Formstempel, der mit dem Trägerteil belegt ist, und einer Matrize, in die eine Formhaut eingelegt ist. Formhaut und Trägerteil werden in einem bestimmten Abstand zueinander gehalten. Der Zwischenraum zwischen Trägerteil und Formhaut, die sog. Kavität, wird auf die übliche Weise ausgeschäumt.

Erfindungsgemäß weist nun das Trägerteil an den Stellen, an denen später die Öffnungsnut angebracht werden soll, zur Kavität hin lediglich eine dünne Schwimmhaut auf. Diese Schwimmhaut schützt davor, dass beim Ausschäumen an dieser Stelle Schaum austreten kann, gleichzeitig ist sie aber so dünn, dass sie mit einer im Schäumwerkzeug angebrachten Schneid- oder Stanzvorrichtung problemlos durchstoßen werden kann.

Erfindungswesentlich ist nun, dass während des Ausschäumens, zum Ende des Steigvorganges und zu Beginn der Aushärtungsphase des Schaumes, die Schwimmhaut mit einem Schieber, der Teil eines im Schäumwerkzeug angeordneten Stanzwerkzeuges ist, durchstoßen wird. Der Schieber wird dabei in die noch nicht ausgehärtete Schaumschicht eingeführt und verbleibt dort bis zur Erstarrung des Schaumes. Nach dem Erstarren des Schaumes wird der Schieber wieder zurückgezogen, sodass im erstarrten Schaum eine Nut in Form eines Abbildes des Schiebers verbleibt. Bei einer bevorzugten Ausführungsform der Erfindung ist die Form des Schiebers so ausgewählt, dass eine Nachbearbeitung der Nut nicht mehr notwendig ist.

Die Vorrichtung zur Herstellung von Formteilen, die eine Öffnungsnut für eine Airbagentfaltungsöffnung aufweisen, umfasst ein Formwerkzeug zur Ausbildung eines Trägerteils und ein Schäumwerkzeug zum Hinterschäumen des Trägerteils, wobei das Schäumwerkzeug mit einer Schneid- und Stanzvorrichtung ausgerüstet ist, die einen Schieber zum Durchstoßen einer Schwimmhaut aufweist.

Bei einer bevorzugten Ausführungsform dieser Vorrichtung ist das Formwerkzeug (Spritzgusswerkzeug) mit einem Schieber zur Ausbildung einer Nut versehen.

Die Formteile werden bevorzugt für Innenverkleidungen von Kraftfahrzeugen, wie z.B. Instrumententafeln und Seitenverkleidungen eingesetzt.

Im Folgenden wird die Erfindung anhand von Abbildungen ausführlich erläutert, dabei zeigen
- Fig. 1: eine Schnittdarstellung eines Ausschnittes eines in ein Schäumwerkzeug eingelegten Formteiles vor dem Schäumprozess,
- Fig. 2: das Formteil aus Fig. 1 während des Schäumvorganges,
- Fig. 3: das Formteil aus Fig. 1 und 2 beim Einbringen der Öffnungsnut durch einen Schieber
- Fig. 4: das fertiggestellte Formteil aus den Figuren 1, 2 und 3 mit Öffnungsnut.

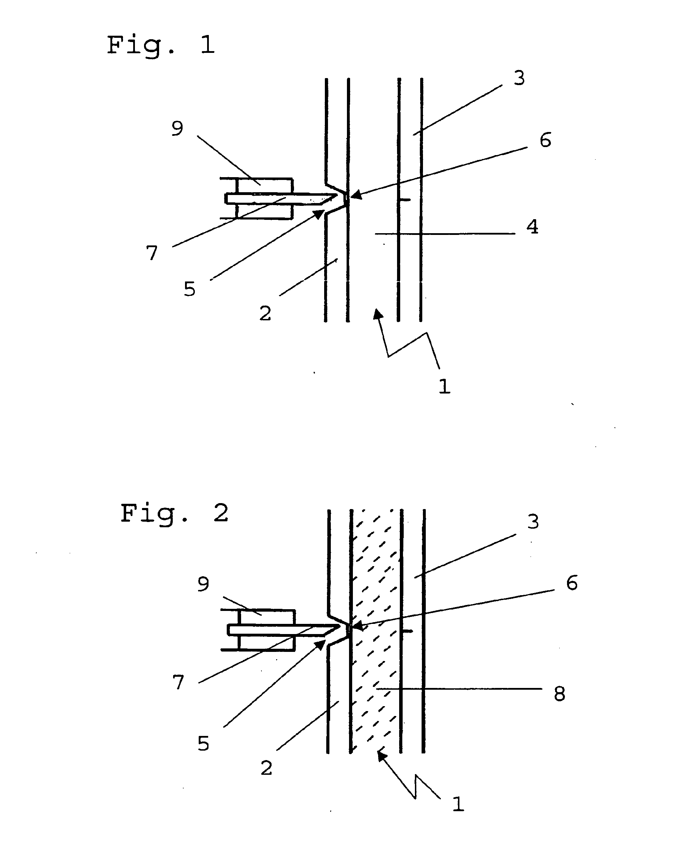

In den Figuren 1 bis 4 ist das Prinzip der vorliegenden Erfindung wiedergegeben.

Die Fig. 1 zeigt einen Ausschnitt eines in ein Schäumwerkzeug eingelegten Formteiles 1 mit einem Trägerteil 2 und einer Formhaut 3, wobei zwischen Trägerteil 2 und Formhaut 3 eine Kavität 4 ausgebildet ist. Das Trägerteil 2 weist eine Nut 5 auf, die zur Kavität 4 hin mit einer Schwimmhaut 6 versehen ist. Auf Höhe der Nut 5 ist im Schäumwerkzeug ein Stanzwerkzeug 9 zu erkennen, das einen Schieber 7 aufweist, der in Richtung zur Nut 5 hin verschiebbar ist.

Die Fig. 2 zeigt das Formteil 1 aus Fig. 1, wobei nun die Kavität 4 mit einem Schaum 8 befüllt ist. Bei dem Schaum 8 handelt es sich üblicherweise um Polyurethanschaum, es können jedoch auch andere Schäume eingesetzt werden, die ein ähnliches Verhalten zeigen.

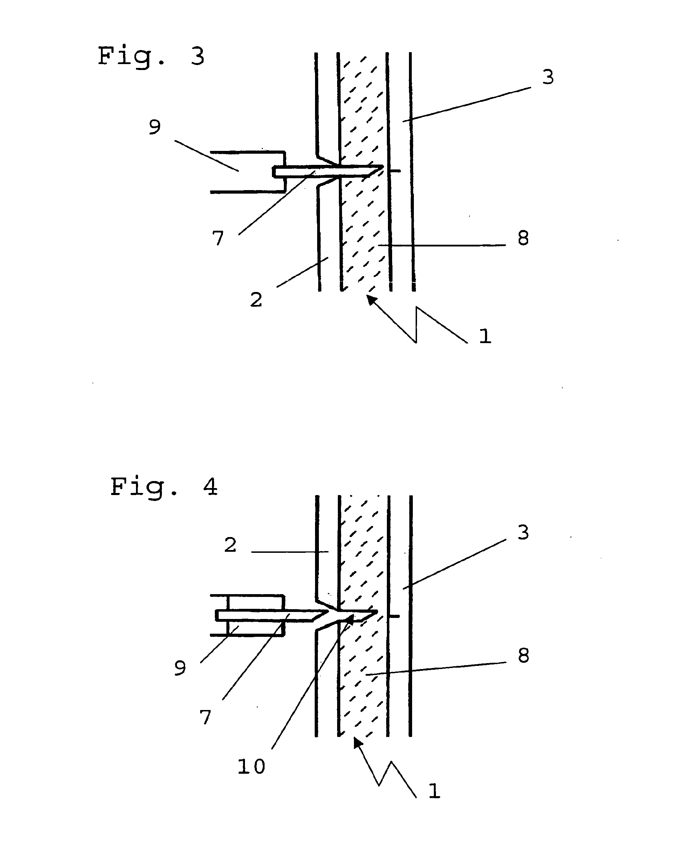

Die Fig. 3 zeigt das Formteil 1 aus den Figuren 1 und 2, wobei der Schieber 7 jetzt durch die Schwimmhaut 6 hindurch in den Schaum 8 eingeführt ist. Erfindungsgemäß verbleibt der Schieber so lange im Schaum 8, bis dieser ausgehärtet ist.

In der Fig. 4 ist das Formteil 1 aus den Figuren 1 bis 3 zu erkennen, wobei nun der Schaum 8 ausgehärtet ist und der Schieber 7 wieder in seine Ausgangsposition in dem Stanzteil 9 zurückgeführt ist. In dem Schaum 8 ist nun eine Öffnungsnut 10 als Abbild des Schiebers 7 zu erkennen.

Die Figuren 1 bis 4 machen das Prinzip des erfindungsgemäßen Verfahrens deutlich, bei dem zunächst während des Spritzgießens das Trägerteil 2 an den Stellen, an denen später die Öffnungsnut 5 ausgebildet werden soll, verdünnt wird. Dieses Verdünnen geschieht vorzugsweise mit Hilfe eines Schiebers, der in das noch nicht vollständig erstarrte thermoplastische Material des Trägerteils 2 eingeführt wird. Der Vorteil des Verdünnens mit dem Schieber besteht darin, dass dadurch Störungen des Füllvorgangs beim Spritzgießen vermieden werden können und keine Fließlinien gebildet werden, was später im erstarrten Kunststoffteil zu Schwachstellen führen könnte. Derartige Schwachstellen können dann dazu führen, dass das Formteil beim Öffnen des Airbags zersplittert und die Fahrzeuginsassen durch herumfliegende Splitter verletzt werden.

In dem nächsten Schritt wird dann das Trägerteil 2 mit Nut 5 und ausgebildeter Schwimmhaut 6 im Schäumwerkzeug zusammen mit einer Formhaut 3 ausgeschäumt. Auf diese Weise wird aus Formhaut 3, Schaum 8 und Trägerteil 2 das Formteil 1 gebildet. Während des Schäumvorganges wird der Schieber 7 durch die Schwimmhaut 6 in den noch nicht vollständig erstarrten Schaum 8 eingeführt. Durch die vorherige Ausbildung der Nut 5 mit Schwimmhaut 6 kann nun der Schieber 7, ohne dass er zusätzlich beheizt werden muss, problemlos in den Schaum 8 eingeführt werden. Die Ausbildung der Öffnungsnut 10 im Schaum 8 mit dem unbeheizten Schieber 7 hat den zusätzlichen Vorteil, dass das gleichmäßige Aushärten des Schaums 8 nicht beeinträchtigt wird und so ein regelmäßiger Verlauf der Öffnungsnut gewährleistet ist.

### Bezugszeichenliste

- 1: Formteil
- 2: Trägerteil
- 3: Formhaut
- 4: Kavität
- 5: Nut (Trägerteil)
- 6: Schwimmhaut
- 7: Schieber
- 8: Schaum
- 9: Stanzvorrichtung
- 10: Öffnungsnut

## Patentansprüche

1. Verfahren zur Herstellung von Formteilen (1), die eine Öffnungsnut (10) für eine Airbagenfaltungsciffnung aufweisen und aus einem Trägerteil (2), einer Formhaut (3) und einer geschäumten Schicht (8), die zwischen Trägerteil (2) und Formhaut (3)ausgebildet ist, bestehen,
wobei das Verfahren die Schritte umfasst:
a) Spritzgießen des Trägerteils (2) in einem Formwerkzeug
b) Einlegen des spritzgegossenen Trägerteils (2) und der Formhaut (3) in ein Schäumwerkzeug, wobei zwischen Formhaut (3) und Trägerteil (2) eine Kavität (4) ausgebildet wird, und
c) Ausschäumen der Kavität (4),
**dadurch gekennzeichnet, dass**
i) beim Spritzgießen im Trägerteil (2) eine mit einer zur Kavität (4) gerichteten Schwimmhaut (6) versehene Nut (5) ausgebildet wird,
ii) die Schwimmhaut (6) während des anschließenden Schäumvorgangs mit einem Schieber (7) durchstoßen wird, und
iii) der Schieber (7) im aushärtenden Schaum (8) verbleibt, bis im verfestigten Schaum (8) eine Öffnungsnut (10) für eine Airbagentfaltungsöffnung ausgebildet ist.

2. Verfahren nach Anspruch 1,
**dadurch gekennzeichnet, dass** die Nut (5) im Trägerteil (2) während des Spritzgießens durch Einführen eines Schiebers in das noch nicht entformte und noch nicht vollständig ausgehärtete Trägerteil (2) ausgebildet wird.

3. Verfahren nach Anspruch 1 oder 2,
**dadurch gekennzeichnet, dass** das Durchstoßen der Schwimmhaut (6) im Schäumwerkzeug zum Ende des Steigvorganges und zu Beginn der Aushärtephase des Schaums (8) erfolgt.

4. Verfahren nach einem der Ansprüche 1 bis 3,
**dadurch gekennzeichnet, dass** der Schieber (7) die für die Öffnungsnut (10) erforderliche Endkontur aufweist.

5. Verfahren nach einem der Ansprüche 1 bis 4,
**dadurch gekennzeichnet, dass** das Trägerteil (2) aus einem verstärkten oder unverstärkten thermoplastischen Kunststoff, insbesondere Polypropylen (PP), Polycarbonat-Polybutylenterephthalat-Blend (PC/PBT), Acrylnitril-Butadien-Styrol-Polycarbonat-Blend (ABS/PC), oder Styrol-Maleinsäureanhydrid-Copolymer (SMA), gebildet ist.

6. Verfahren nach einem der Ansprüche 1 bis 5,
**dadurch gekennzeichnet, dass** die Formhaut aus einem thermoplastischen Kunststoff oder einem elastomeren Reaktionskunststoff, z.B. Polyurethan, gebildet ist.

7. Verfahren nach einem der Ansprüche 1 bis 6,
**dadurch gekennzeichnet, dass** der Schaum (8) ein Polyurethanschaum ist.

## Claims

1. A method of producing moulded parts (1) which have an opening groove (10) for an airbag unfolding opening and comprise a carrier part (2), a moulded skin (3) and a foamed layer (8) which is formed between the carrier part (2) and the moulded skin (3),
wherein the method comprises the steps:
a) injection-moulding the carrier part (2) in a moulding tool,
b) inserting the injection-moulded carrier part (2) and the moulded skin (3) in a foaming tool, wherein a cavity (4) is formed between the moulded skin (3) and the carrier part (2), and
c) foam-filling the cavity (4),
**characterized in that**
i) during the injection-moulding in the carrier part (2) a groove (5) provided with a webbing (6) directed towards the cavity (4) is formed,
ii) during the subsequent foaming procedure the webbing (6) is pierced by a slide (7), and
iii) the slide (7) remains in the hardening foam (8) until an opening groove (10) for an airbag unfolding opening is formed in the solidified foam (8).

2. A method according to claim 1, **characterized in that** the groove (5) is formed in the carrier part (2) during the injection-moulding by the insertion of a slide into the carrier part (2) which has not yet been removed from the mould and has not yet completely hardened.

3. A method according to claim 1 or 2, **characterized in that** the piercing of the webbing (6) is carried out in the foaming tool at the end of the rising procedure and at the beginning of the hardening phase of the foam (8).

4. A method according to any one of claims 1 to 3, **characterized in that** the slide (7) has the end contour required for the opening groove (10).

5. A method according to any one of claims 1 to 4, **characterized in that** the carrier part (2) is formed from a reinforced or non-reinforced thermoplastic plastics material, in particular polypropylene (PP), polycarbonate polybutylene terephthalate blend (PC/PBT), acrylonitrile butadiene styrene polycarbonate blend (ABS/PC) or styrene maleic anhydride copolymer (SMA).

6. A method according to any one of claims 1 to 5, **characterized in that** the moulded skin is formed from a thermoplastic plastics material or an elastomer reactive plastics material, for example polyurethane.

7. A method according to any one of claims 1 to 6, **characterized in that** the foam (8) is a polyurethane foam.

## Revendications

1. Procédé de fabrication d'une pièce moulée (1) ayant une rainure d'ouverture (10) pour une ouverture de déploiement d'un coussin gonflable de sécurité et se composant d'une partie de support (2), d'une peau de moulage (3) et d'une couche expansée (8) entre la partie de support (2) et la peau de moulage (3),
procédé comprenant les étapes suivantes ;
a) injecter la partie de support (2) dans un moule,
b) mettre en place la partie de support (2), injectée, moulée, et la peau de moulage (3) dans un outil d'expansion en formant une cavité (4) entre la peau de moulage (3) et la partie de support (2), et
c) développer la mousse dans la cavité (4),
procédé **caractérisé en ce que**
i) lors de l'injection de la partie de support (2), on réalise une rainure (5) avec une bavure (6) dirigée vers la cavité (4) dans la partie de support (2),
ii) on perce la bavure (6) pendant le développement consécutif de la mousse à l'aide d'un poussoir (7),
iii) on laisse le poussoir (7) dans la mousse durcie (8) jusqu'à ce que dans la mousse terminée (8), une rainure d'ouverture (10) se soit réalisée comme ouverture de déploiement du coussin de sécurité.

2. Procédé selon la revendication 1,
**caractérisé en ce qu'**
on réalise la rainure (5) dans la partie de support (2) pendant l'injection en introduisant un coulisseau dans la partie de support (2) non encore démoulée ni encore totalement durcie.

3. Procédé selon la revendication 1 ou 2,
**caractérisé en ce qu'**
on perce la bavure (6) dans l'outil d'expansion à la fin de l'opération de montée et au début de la phase de durcissement de la mousse (8).

4. Procédé selon l'une des revendications 1 à 3,
**caractérisé en ce que**
le coulisseau (7) a un contour d'extrémité permettant de réaliser la rainure d'ouverture (10).

5. Procédé selon l'une des revendications 1 à 4,
**caractérisé en ce que**
la partie de support (2) est en une matière thermoplastique renforcée ou non renforcée, notamment un polypropylène (PP), un mélange polycarbonate-polybutylénetéréphthalate (PC/PBT), un mélange acrylnitril-butadiêne-styrêne-polycarbonate (ABS/PC), ou un copolymère-styrène-anhydride d'acide maléique (SMA).

6. Procédé selon l'une des revendications 1 à 5,
**caractérisé en ce qu'**
on forme la peau de moulage en une matière thermoplastique ou en une matière plastique de réaction d'élastomère par exemple du polyuréthane.

7. Procédé selon l'une des revendications 1 à 6,
**caractérisé en ce que**
la mousse (8) est une mousse de polyuréthane.
